# EUROPÄISCHE PATENTANMELDUNG

(11) **EP 1 384 611 A2**
(43) Veröffentlichungstag der Anmeldung: **28.01.2004**
(21) Anmeldenummer: 03015353.0
(22) Anmeldetag: 08.07.2003
(51) Int. Cl.: B60J 7/02

(54) **Führungsanordnung für Kraftfahrzeug-Schiebedächer**

(30) Priorität: 23.07.2002 DE 10233257
(71) Anmelder: ArvinMeritor GmbH, 63128 Dietzenbach (DE)
(72) Erfinder: Friedrich, Norbert, Dipl.-Ing., 61273 Wehrheim 1 (DE); Hattass, Rainer, Dipl.-Ing., 63584 Gründau (DE)
(74) Vertreter: Oppermann, Ewald, Dipl.-Ing.

(57) **Zusammenfassung**

Bei einer Führungsanordnung für lineare Verschiebebewegungen von Führungsschuhen (10) an Führungsschienen (3) für Schiebedächer von Kraftfahrzeugen sind an jedem der vier Führungsschuhe (10) an drei voneinander beabstandeten Stellen, die etwa mit den Spitzen eines gedachten Dreiecks zusammentreffen, Gleitelemente (17, 20) vorgesehen, die an drei zugeordneten Gleitbahnen (16, 19) der zugehörigen Führungsschiene (3) spielarm oder bei federnder Ausbildung des Führungsschuhs (10) sogar spielfrei und klapperfrei verschiebbar geführt sind.

## Beschreibung

Die Erfindung bezieht sich auf eine Führungsanordnung für lineare Verschiebebewegungen von Führungsschuhen an Führungsschienen für Schiebedächer, entsprechend dem Oberbegriff des Patentanspruchs 1.

Die Bezeichnung "Schiebedächer" soll für die Zwecke der vorliegenden Erfindung alle Konstruktionen einschließen, bei denen mindestens ein Deckel einer Dachöffnung eines Kraftfahrzeugs verlagerbar zugeordnet und dabei mittels Führungsschuhen an seitlich von der Dachöffnung angebrachten Führungsschienen verschiebbar ist. Dazu gehören Konstruktionen, bei denen der Deckel nach Absenken seiner Hinterkante zur Freigabe der Dachöffnung unter die hintere feste Dachfläche verschiebbar ist, aber auch sogenannte Schiebehebedächer, bei denen der Deckel außerdem ausgehend von seiner die Dachöffnung schließenden Stellung um eine in der Nähe seiner Vorderkante vorgesehene Schwenkachse zur Ausstellung über die feste Dachfläche verschwenkt werden kann. Schließlich soll diese Definition auch solche Konstruktionen umfassen, bei denen der Deckel nach Anheben seiner Hinterkante mehr oder weniger nach hinten über die hintere feste Dachfläche verlagerbar ist (sogenannte Oberfirstschiebedächer, Spoilerdächer). Auch solche Dachkonstruktionen sollen eingeschlossen sein, bei denen der mindestens eine Deckel nicht aus Blech oder Glas gebildet ist, sondern als Faltdach aus flexiblem Flächenmaterial.

In der Regel sind für verschiebbare Deckel von Schiebedächern zwei vordere und zwei hintere Führungsschuhe vorgesehen, die jeweils paarweise angeordnet sind und von denen die vorderen Führungsschuhe das schwenklagerseitige vordere Ende des Deckels führen, während mit den hinteren Führungsschuhen die Elemente zur Höhenverlagerung des Deckels und die den Verschiebeantrieb bewirkenden Antriebselemente, z.B. biegesteif geführte flexible Antriebskabel mit Gewindewicklung zum Eingriff eines Antriebszahnritzels, verbunden sind.

Die Gleitelemente an den Führungsschuhen sind nach dem Stande der Technik entweder als Gleitstücke ausgebildet, die in U-förmigen Führungsnuten, welche die Gleitbahnen bilden, geführt sind (z.B. DE 197 27 738 C1) oder als U-förmige Gleiter, die an die Gleitbahnen bildenden Führungsstegen der Führungsschienen geführt sind. In beiden Fällen sind die Gleitstücke bzw. die Gleiter paarweise gegenüberliegend an den Führungsschuhen angeordnet, besitzen großflächige Gleitpaarungsflächen und liegen in der Regel auf einer Ebene.

Die Gleitführung der Gleitelemente an den Führungsschienen soll klapperfrei, aber dennoch mit möglichst geringer Reibung erfolgen. Bedingt durch Fertigungstoleranzen kommt es dabei aber entweder zu Preß- oder Spielpassungen. Preßpassungen führen zu hohen Reibwerten und starkem Verschleiß, während Spielpassungen selten klapperfrei sind. Schon geringste Verschmutzungen der Gleitbahnen an den Führungsschienen können diese unerwünschten Effekte noch vergrößern.

Der Erfindung liegt die Aufgabe zugrunde, eine Führungsanordnung der eingangs genannten Art bereitzustellen, welche hinsichtlich der Reibwerte, der Klapperneigung und der Verschmutzungsgefahr erheblich verbessert ist.

Diese Aufgabe wird durch die im Patentanspruch 1 angegebenen kennzeichnenden Merkmale der Führungsanordnung gelöst. Vorteilhafte oder zweckmäßige Weiterbildungen der Führungsanordnung gehen aus den Unteransprüchen hervor und sind nachfolgend ebenfalls beschrieben.

Mit der Erfindung werden drei räumlich voneinander getrennte Gleitelement/Gleitbahn-Paarungen vorgeschlagen, mit welchen jeder Führungsschuh an der Führungsschiene dreipunktartig abgestützt ist, wobei wegen des Höhenversatzes der dritten Gleitelement/Gleitbahn-Paarung zu den beiden anderen Gleitelement/Gleitbahn-Paarungen erhebliche Stützweiten zwischen den drei Abstützstellen erzielt werden. Selbst bei ausreichendem Bewegungsspiel und damit geringen Reibwerten neigt diese Ausbildung nicht zum Klappern.

Vorzugsweise sind die drei Gleitelement/Gleitbahn-Paarungen an dem Führungsschuh und der Führungsschiene wie im Anspruch 2 angegeben angeordnet, wodurch die drei Abstützstellen im Querschnitt betrachtet die Konfiguration eines Dreiecks haben, mit einer sich zwischen den beiden oberen Abstützstellen erstreckenden Grundlinie und einer nach unten weisenden durch die dritte Abstützstelle markierten Dreieckspitze. Wenn die Führungsanordnung entsprechend Anspruch 3 ausgebildet ist, ergibt sich eine symmetrische Anordnung der drei Abstützstellen nach Art eines gleichschenkligen Dreiecks.

Durch die im Anspruch 4 angegebene Ausbildung sind die Gleitbahnen und Gleitelemente verhältnismäßig schmal, so daß sich Kontaktflächen nur geringer Größe an den Gleitelement/Gleitbahn-Paarungen ergeben, wodurch die Verschmutzungsgefahr wesentlich geringer ist als bei den herkömmlichen großflächigen Kontaktflächen.

Eine verkantungsfreie Führung der Führungsschuhe an den Führungsschienen wird erreicht, wenn die Gleitelement/Gleitbahn-Paarungen einen konkaven/konvexen Formeingriff aufweisen, wie das in den Ansprüchen 5 und 6 in zwei Ausbildungsalternativen angegeben ist. Entsprechende Ergebnisse werden erzielt, wenn die beiden oberen Gleitelement/Gleitbahn-Paarungen so ausgebildet sind, wie das in zwei Ausbildungsvarianten in den Ansprüchen 7 und 8 angegeben ist, wobei dabei sogar an diesen beiden Abstützungsstellen eine reibungsarme Linienberührung erzielt wird.

Die Gleitelemente können entsprechend Anspruch 9 einteilig an die Führungsschuhe angeformt sein, wodurch Ausbildung und Herstellung der Führungsschuhe wesentlich vereinfacht werden.

Wenn die Führungsschuhe, wie im Anspruch 10 angegeben, als federnde Elemente ausgebildet sind, erfolgt die Abstützung der Gleitelemente an den zugeordneten Gleitbahnen vorteilhaft mit federndem Andruck, so daß praktisch Spielfreiheit erreicht wird und eintretender Verschleiß kompensiert wird.

Weitere Einzelheiten der Erfindung werden nachfolgend anhand der Ausführungsbeispiele schematisch darstellenden Zeichnungen näher erläutert. Darin zeigt:
- Fig. 1: in perspektivischer Darstellung den Dach- und Fensterbereich eines Personenkraftfahrzeugs,
- Fig. 2: den abgebrochenen Schnitt entlang der Schnittverlaufslinie II-II in Fig. 1, jedoch ohne Karosserieteile, in einer ersten Ausführungsform der Führungsanordnung,
- Fig. 3: einen der Fig. 2 ähnlichen Schnitt, jedoch in einer zweiten Ausführungsform der Führungsanordnung,
- Fig. 4: einen abgebrochenen in einem größeren Maßstab dargestellten Schnitt, der eine Variante der ersten Ausführungsform gemäß Fig. 2 zeigt, und
- Fig. 5: einen abgebrochenen in einem größeren Maßstab dargestellten Schnitt, der eine Variante der zweiten Ausführungsform gemäß Fig. 3 zeigt.

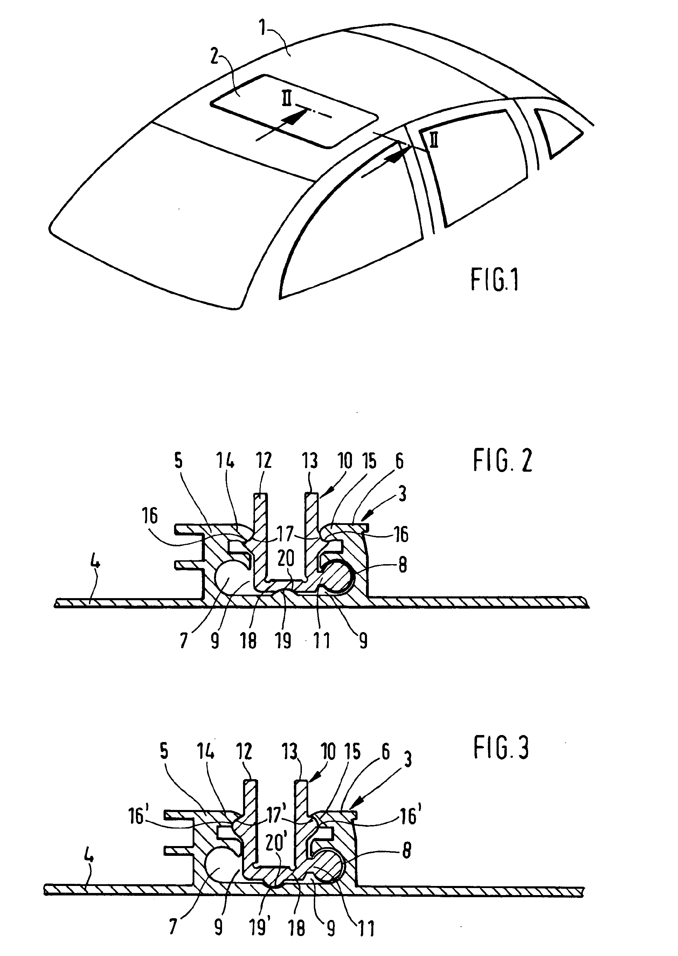

In Fig. 1 ist ein mit einem Schiebedach ausgerüstetes Fahrzeugdach 1 mit geschlossenem Schiebedeckel 2 dargestellt. Der Schiebedeckel 2 ist an zwei seitlichen Führungsschienen 3, von denen in den Figuren 2 und 3 nur die bezogen auf die Vorwärtsfahrtrichtung linke Führungsschiene 3 dargestellt ist, verschiebbar über noch näher zu beschreibende Führungsschuhe geführt. Die rechte Anordnung ist etwa spiegelbildlich gestaltet.

In den beiden in den Figuren 2 und 3 gezeigten Ausführungsformen ist die Führungsschiene 3 beispielsweise einteiliger Bestandteil eines nicht näher dargestellten seitlichen Führungsrahmenteils 4. Die Führungsschiene 3 weist zwei parallel und mit Abstand nebeneinander verlaufende nach oben gerichtete Profilrippen 5 und 6 auf. Die zueinander gekehrten Flächen der Profilrippen 5 und 6 sind parallel zueinander angeordnet. In den Profilrippen 5 und 6 befinden sich unten gegenüberliegend Kabelführungskanäle 7 und 8. Die Kabelführungskanäle 7 und 8 besitzen übereinstimmende kreisförmige Querschnitte, die zur Führungsschienenmitte hin durch Schlitze 9 geöffnet sind. In den Kabelführungskanälen 7 und 8 sind zwei flexible, mit Gewindewicklungen aus Draht versehene Antriebskabel (nicht dargestellt) druck- und zugsteif verschiebbar geführt, die von einem üblicherweise in einem vorderen Führungsrahmenteil (nicht dargestellt) drehbar gelagerten Antriebszahnritzel (nicht dargestellt) gegenläufig zahnstangenähnlich angetrieben werden. Jeweils eines der Antriebskabel ist mit einem der beiden hinteren Führungsschuhe, von denen in den Figuren 2 und 3 der linke Führungsschuh 10 dargestellt ist, über einen durch den Schlitz 9 hindurchgreifenden Mitnehmer 11 verbunden.

Der Führungsschuh 10, der zusammen mit dem nicht dargestellten rechten hinteren Führungsschuh die Verschiebevorrichtung für den Schiebedeckel 2 bildet, besitzt im wesentlichen einen nach oben offenen U-förmigen Querschnitt und weist nach oben gerichtete zueinander parallele Seitenwände 12 und 13 auf, welche im wesentlichen zur Aufnahme von nicht dargestellten Ausstellelementen für den Schiebedeckel 2 dienen. Die beiden nicht dargestellten vorderen Führungsschuhe sind ähnlich ausgebildet, besitzen jedoch keinen Mitnehmer 11. Die vorderen Führungsschuhe nehmen nicht dargestellte Schwenklagerteile für den Schiebedeckel 2 auf. Entsprechendes gilt auch für die Führungen der bei Schiebedächern vorhandenen verschiebbaren Wasserrinne, die bei geschlossenem Schiebedeckel den hinteren Randspalt unterfängt (nicht dargestellt).

An den Profilrippen 5 und 6 sind bei beiden in den Figuren 2 und 3 dargestellten Ausführungsformen zueinander einwärts gekehrte und nach unten gebogene Stege 14 und 15 vorgesehen, die mit ihren Enden Gleitbahnen bilden. Im Fall der Fig. 2 sind das konvex gewölbte Gleitbahnen 16 und bei Fig. 3 konkav gewölbte Gleitbahnen 16'.

Außen an den Seitenwänden 12 und 13 des Führungsschuhs 10 sind den Gleitbahnen 16, 16' zugeordnete Gleitelemente einteilig angeformt. Im Fall der Fig. 2 sind das konkav gewölbte Gleitelemente 17 und bei Fig. 3 konvex gewölbte Gleitelemente 17'.

Zwischen den beiden Profilrippen 5, 6 der Führungsschiene 3 befindet sich unten eine dritte Gleitbahn. Im Fall der Fig. 2 ist das eine rippenartige konvex gewölbte Gleitbahn 19 und bei Fig. 3 eine nutartige konkav gewölbte Gleitbahn 19'.

Die beiden Seitenwände 12 und 13 des Führungsschuhs 10 sind unten über einen Verbindungssteg 18 miteinander einteilig verbunden. An der Unterseite des Verbindungsstegs 18 befindet sich ein drittes Gleitelement. Im Fall der Fig. 2 ist das ein nutartiges konkav gewölbtes Gleitelement 20 und bei Fig. 3 ein rippenartiges konvex gewölbtes Gleitelement 20'.

Aus der vorstehenden Beschreibung und den Zeichnungen ist ersichtlich, daß bei beiden Ausführungsformen die Führungsschuhe 10 jeweils drei voneinander beabstandete Gleitelemente 17, 20 bzw. 17', 20' aufweisen, die an drei zugeordneten Gleitbahnen 16, 19 bzw. 16', 19' praktisch spielfrei abgestützt sind. Bei beiden Ausführungsformen besteht Kontakt zwischen der Führungsschiene 3 und dem Führungsschuh 10 nur an den beschriebenen Stellen der drei Gleitelement/Gleitbahn-Paarungen, abgesehen von dem Kontakt zwischen dem Mitnehmer 11 und dem zugeordneten Kabelführungskanal 8. Außerdem ist ersichtlich, daß die beiden oberen Gleitelement/Gleitbahn-Paarungen bei beiden Ausführungsbeispielen zu der dritten unteren Gleitelement/Gleitbahn-Paarung in der Höhe versetzt zueinander angeordnet sind. Dabei befinden sich die beiden oberen Gleitelement/ Gleitbahn-Paarungen an unterschiedlichen Seiten des Führungsschuhs 10 etwa in gleicher Höhe am Führungsschuh 10 und der Führungsschiene 3. Die untere dritte Gleitelement/Gleitbahn-Paarung befindet sich zwischen den beiden Profilrippen 5 und 6 der Führungsschiene 3, vorzugsweise wie gezeichnet in einer mittleren Lage zwischen den beiden Profilrippen 5 und 6.

Die Zeichnungen verdeutlichen auch, daß die Gleitelemente 17, 17' und 20, 20' ebenso wie die Gleitbahnen 16, 16' und 19, 19' in Relation zur Länge der Gleitelemente, die etwa der Länge des Führungsschuhs 10 entspricht, nur eine geringe Breite aufweisen.

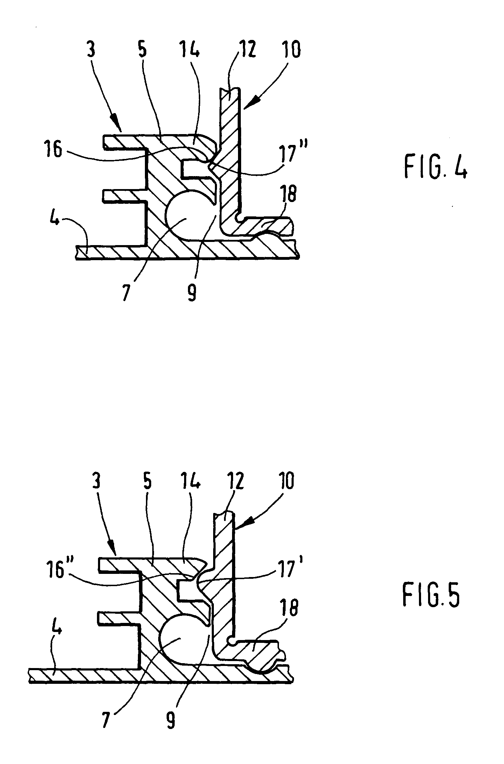

Die in den Figuren 4 und 5 dargestellten Führungsanordnungen sind Varianten der in den Figuren 2 bzw. 3 gezeigten Anordnungen. Beide Anordnungsvarianten beziehen sich auf die Ausbildung der beiden oberen Gleitelement/Gleitbahn-Paarungen. Während bei Fig. 4 die Gleitelemente 17'' eine ebene Gleitfläche aufweisen, sind bei Fig. 5 die Gleitbahnen 16'' als ebene Fläche ausgebildet. Die Gleitbahn 16 bei Fig. 4 und das Gleitelement 17' bei Fig. 5 sind jedoch konvex gewölbt, wodurch günstige Linienberührungen bei beiden Varianten erzielt werden.

Die Führungsschuhe 10 sind als federnde Elemente ausgebildet, so daß die Gleitelemente den zugeordneten Gleitbahnen federnd angedrückt sind.

Bei einer Führungsanordnung für lineare Verschiebebewegungen von Führungsschuhen an Führungsschienen für Schiebedächer von Kraftfahrzeugen sind an jedem der vier Führungsschuhe an drei voneinander beabstandeten Stellen, die etwa mit den Spitzen eines gedachten Dreiecks zusammentreffen, Gleitelemente vorgesehen, die an drei zugeordneten Gleitbahnen der zugehörigen Führungsschiene spielarm oder bei federnder Ausbildung des Führungsschuhs sogar spielfrei und klapperfrei verschiebbar geführt sind.

### Bezugszeichenliste

- 1: Fahrzeugdach
- 2: Schiebedeckel
- 3: Führungsschiene
- 4: Führungsrahmenteil
- 5: Profilrippe
- 6: Profilrippe
- 7: Kabelführungskanal
- 8: Kabelführungskanal
- 9: Schlitze
- 10: Führungsschuh
- 11: Mitnehmer
- 12: Seitenwand
- 13: Seitenwand
- 14: Steg
- 15: Steg
- 16, 16', 16'': Gleitbahnen
- 17, 17', 17'': Gleitelemente
- 18: Verbindungssteg
- 19, 19': Gleitbahnen
- 20, 20': Gleitelemente

## Patentansprüche

1. Führungsanordnung für lineare Verschiebebewegungen von Führungsschuhen (10) an Führungsschienen (3) für Schiebedächer von Kraftfahrzeugen, bei der an den Führungsschuhen (10) angebrachte Gleitelemente (17, 17', 20, 20') an Gleitbahnen (16, 16', 19, 19') der Führungsschienen (3) verschiebbar geführt sind, **dadurch gekennzeichnet, daß** die Führungsschuhe (10) jeweils mit drei voneinander beabstandeten Gleitelementen (17, 17', 20, 20') an drei zugeordneten Gleitbahnen (16, 16', 19, 19') der Führungsschienen (3) abgestützt sind, wobei sich zwei Gleitelement/Gleitbahn-Paarungen (17, 16; 17', 16') an unterschiedlichen Seiten zwischen Führungsschiene (3) und Führungsschuh (10) befinden, während die dritte Gleitelement/Gleitbahn-Paarung (20, 19; 20', 19') zu den beiden anderen Gleitelement/Gleitbahn-Paarungen (17, 16; 17', 16') in der Höhe versetzt angeordnet ist.

2. Führungsanordnung nach Anspruch 1, **dadurch gekennzeichnet, daß** die beiden an unterschiedlichen Seiten zwischen Führungsschiene (3) und Führungsschuh (10) angeordneten Gleitelement/Gleitbahn-Paarungen (17, 16,; 17', 16') sich etwa in gleicher Höhe oben an dem Führungsschuh (10) und der Führungsschiene (3) befinden, während die dritte Gleitelement/Gleitbahn-Paarung (20, 19; 20', 19') unten zwischen Führungsschuh (10) und Führungsschiene (3) vorgesehen ist.

3. Führungsanordnung nach Anspruch 1 oder 2, **dadurch gekennzeichnet, daß** die dritte Gleitelement/Gleitbahn-Paarung (20, 19; 20', 19') mit Bezug auf die beiden anderen Gleitelement/Gleitbahn-Paarungen (17, 16; 17', 16') in einer mittleren Lage vorgesehen ist.

4. Führungsanordnung nach einem der Ansprüche 1 bis 3, **dadurch gekennzeichnet, daß** die Gleitelemente (17, 17', 20, 20') und Gleitbahnen (16, 16', 19, 19') in Relation zur Länge der Gleitelemente (17, 17', 20, 20') nur eine geringe Breite aufweisen.

5. Führungsanordnung nach einem der Ansprüche 1 bis 4, **dadurch gekennzeichnet, daß** die Gleitelemente (17, 20) eine konkav gewölbte Form haben, während die Gleitbahnen (16, 19) eine entsprechend konvex gewölbte Form aufweisen, jeweils im Querschnitt gesehen.

6. Führungsanordnung nach einem der Ansprüche 1 bis 4, **dadurch gekennzeichnet, daß** die Gleitelemente (17', 20') eine konvex gewölbte Form haben, während die Gleitbahnen (16', 19') eine entsprechend konkav gewölbte Form aufweisen, jeweils im Querschnitt gesehen.

7. Führungsanordnung nach einem der Ansprüche 1 bis 4, **dadurch gekennzeichnet, daß** bei den beiden an unterschiedlichen Seiten zwischen Führungsschiene (3) und Führungsschuh (10) befindlichen Gleitelement/Gleitbahn-Paarungen die Gleitelemente (17'') eine ebene Gleitfläche aufweisen, während die Gleitbahnen (16) eine konvex gewölbte Form aufweisen, im Querschnitt gesehen.

8. Führungsanordnung nach einem der Ansprüche 1 bis 4, **dadurch gekennzeichnet, daß** bei den beiden an unterschiedlichen Seiten zwischen Führungsschiene (3) und Führungsschuh (10) befindlichen Gleitelement/Gleitbahn-Paarungen die Gleitelemente (17') eine konvex gewölbte Form haben, im Querschnitt gesehen, während die Gleitbahnen (16'') als ebene Fläche ausgebildet sind.

9. Führungsanordnung nach einem der Ansprüche 1 bis 8, **dadurch gekennzeichnet, daß** die Gleitelemente (17, 17', 20, 20') einteilig an die Führungsschuhe (10) angeformt sind.

10. Führungsanordnung nach einem der Ansprüche 1 bis 9, **dadurch gekennzeichnet, daß** die Führungsschuhe (10) als federnde Elemente ausgebildet sind, so daß die Gleitelemente (17, 17', 20, 20') den Gleitbahnen (16, 16', 19, 19') federnd angedrückt sind.
